Europäisches Patentamt

European Patent Office

Office européen des brevets

(19)

(11) Numéro de publication: **0 052 024**
**B1**

(12) **FASCICULE DE BREVET EUROPEEN**

(45) Date de publication du fascicule du brevet:
12.09.84

(51) Int. Cl.³: **H 04 N 5/33,** H 04 N 5/21

(21) Numéro de dépôt: **81401545.9**

(22) Date de dépôt: **06.10.81**

(54) Dispositif opto-électronique d'analyse d'images vidéo-fréquence par balayage.

(30) Priorité: **17.10.80 FR 8022275**

(43) Date de publication de la demande:
**19.05.82 Bulletin 82/20**

(45) Mention de la délivrance du brevet:
**12.09.84 Bulletin 84/37**

(84) Etats contractants désignés:
**DE FR GB IT NL SE**

(56) Documents cités:
**FR - A - 2 266 398
GB - A - 1 549 168
US - A - 3 751 586
US - A - 4 225 883**

(73) Titulaire: **THOMSON-CSF, 173, Boulevard Haussmann,
F-75379 Paris Cedex 08 (FR)**

(72) Inventeur: **Beck, Jean-Louis, THOMSON-CSF
SCPI 173, bld Haussmann, F-75360 Paris Cedex 08 (FR)**
Inventeur: **Le Bars, Jean-François, THOMSON-CSF
SCPI 173, bld Haussmann, F-75360 Paris Cedex 08 (FR)**
Inventeur: **Emmanuelli, Yves-Antoine, THOMSON-CSF
SCPI 173, bld Haussmann, F-75360 Paris Cedex 08 (FR)**
Inventeur: **Bargues, Denis, THOMSON-CSF
SCPI 173, bld Haussmann, F-75360 Paris Cedex 08 (FR)**

(74) Mandataire: **Trocellier, Roger et al, THOMSON-CSF
SCPI 173, Bld Haussmann, F-75379 Paris Cedex 08 (FR)**

## Description

La présente invention concerne un dispositif opto-électronique d'analyse d'une image vidéo-fréquence par balayage, comportant un dispositif de correction de dérives thermiques.

Il est connu du brevet français 2 363 084 publié le 24 mars 1978 un dispositif opto-électronique d'analyse d'images vidéo-fréquence comportant des moyens de réception optique, des éléments optiques entraînés de manière à produire un balayage d'image, une optique de focalisation sur un dispositif de détection comprenant un réseau de détecteurs et des moyens vidéo-fréquence de traitement des signaux des détecteurs. Le dispositif opto-électronique d'analyse d'images vidéo-fréquence par balayage est du type ligne par ligne.

On présente aux détecteurs, à la fin de chaque balayage d'image, un dispositif, par exemple une mire, permettant de produire un flux lumineux uniforme sur tous les détecteurs, et les signaux de chaque détecteur peuvent être corrigés, pour chaque balayage d'image, par une boucle de correction en soustrayant pour chaque détecteur, la valeur mémorisée correspondant au flux uniforme détecté. Ce dispositif de correction associant une boucle de correction et une mire utilise des pré-amplificateurs pourvus d'une capacité d'entrée pour retenir les composantes continues des signaux puisque le recalage a lieu à chaque image. Le recalage périodique permet de recaler chaque chaîne de mesure avant chaque balayage image, ce qui permet de tenir compte de l'élimination des composantes continues des signaux et de compenser les dérives thermiques notamment du premier étage d'amplification des signaux de chaque détecteur, sans toutefois détériorer la restitution de l'image. Lors d'un balayage d'image, les constantes de temps des entrées des préamplificateurs sont à cet effet choisies de telles sorte que des signaux continus ne soient pas affaiblis de plus de 1 % pendant une période de balayage image. L'utilisation d'un tel dispositif de correction a pour inconvénient de mobiliser une part importante du temps de traitement (au moins 25%) aux seules opérations de recalage qui doivent impérativement être réalisées à chaque image. D'autre part et comme on le verra par la suite, l'utilisation d'un tel dispositif de correction dans un dispositif opto-électronique d'analyse d'images par balayage rotatif imposerait en outre qu'une partie de l'image soit perdue, notammennt dans la zone centrale.

La présente inventionn a pour objet un dispositif d'analyse d'images vidéo-fréquence par balayage, comportant un dispositif de correction ne présentant pas les défauts précités et notamment dont le recalage, opéré lors d'une phase d'initialisation, reste valable pour une durée assez longue (typiquement quelques minutes).

L'invention concerne ainsi un dispositif opto-électronique d'analyse d'images vidéo-fréquence par balayage comportant une optique entraînée de manière à produire un balayage d'image, une optique de focalisation sur un dispositif de détection comprenant au moins un réseau de détecteurs, et des moyens vidéo-fréquence de traitement des signaux détectés comprenant notamment des circuits d'amplification des signaux détectés respectifs et un dispositif de correction des dérives thermiques caractérisé en ce que chaque circuit d'amplification étant relié au détecteur correspondant par une liaison continue, ledit dispositif de correction comprend un dispositif dit d'occultation à deux états, pour produire dans un premier état lors d'une phase d'initialisation un flux uniforme sur tous les détecteurs à la place du flux de réception correspondant à d'image vidéo-fréquence et inversement dans le second état qui correspond au fonctionnement normal du dispositif d'analyse, et une boucle de correction comprenant:

—— une mémoire de stockage mémorisant les valeurs des signaux présents en sortie desdits circuits d'amplification lorsque le dispositif dit l'occultation est dans le premier état,

— un circuit soustracteur retranchant respectivement lesdites valeurs mémorisées, de celles présentes en sortie des circuits d'amplification respectifs, en sorte de compenser lesdites dérives,

— un circuit de mesure produisant la valeur moyenne des signaux vidéo-fréquence,

— un deuxième circuit soustracteur retranchant ladite valeur moyenne du signal de chaque détecteur.

L'invention sera mieux comprise à la lecture de la description qui va suivre, donnée à titre d'exemple non limitatif, en se reportant aux dessins ci-annexés ou:

— la figure 1a représente un diagramme générale d'un dispositif selon l'invention, et la figure 1b une variante,

— les figures 2 à 7 illustrent un balayage rotatif,

— la figure 8 représente un schéma général des moyens de traitement des signaux vidéo-fréquence,

— la figure 9 représente un bloc de multiplexage et de correction des tensions résiduelles,

—— la figure 10 représente un schéma d'un circuit de mesure dont un mode de réalisation est représenté à la figure 11,

— les figures 12a et 12b sont représentatives de l'action du circuit de mesure après soustraction des signaux des détecteurs.

La figure 1a représente un dispositif opto-électronique d'analyse d'images vidéo-fréquence par balayage comportant une optique de balayage 22 entraînée par un moyen mécanique 23 par exemple en rotation, de manière à produire un balayage d'image, une optique de focalisation 24 sur un dispositif de détection D comprenant au moins un réseau de détecteurs. Des moyens vidéo-fréquence de traitement des signaux des détections comprennent notamment des circuits d'amplification CA des signaux des détecteurs, chaque circuit d'amplification étant relié au détecteur correspondant par une liaison continue, c'est-à-dire non capacitive, ainsi qu'un dispositif de correction.

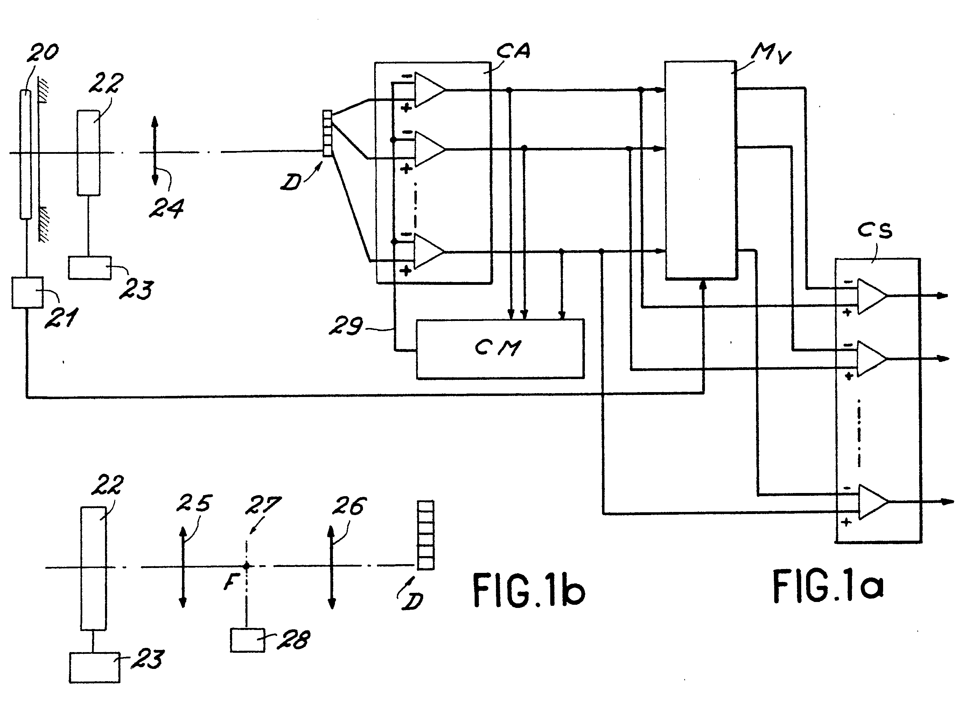

Le dispositif de correction comprend un dispositif dit d'occultation 20 (ou 27) figure 1b à deux états, le premier correspondant à la réception par les détecteurs du réseau d'un flux uniforme, et le second à la réception par ceux-ci de l'image vidéo-fréquence (état de fonctionnement normal du dispositif d'analyse).

Ce peut être un dispositif 20 commandé par un moyen 21 disposé à la pupille d'entrée du dispositif, par exemple un diaphragme commandé par un moteur, ou bien un cache amovible dont le déplacement peut être commandé par un moteur (figure 1a). Ce peut être également un diffuseur lambertien 27 dont le déplacement alternativement dans et hors du faisceau lumineux est commandé par un moteur, et qui est placé au niveau d'un éventuel foyer intermédiaire F de l'optique réceptrice (25, 26) (figure 1b). Le dispositif de correction comprent également en aval du détecteur:

— une mémoire de stockage $M_v$, mémorisant les signaux présents en sortie des circuits d'amplification CA des signaux des détecteurs, lorsque le dispositif d'occultation (20, 27) est dans le premier état. Suivant la figure 1, la mémoire $M_v$ reçoit du moyen 21 un signal représentatif du premier ou du second état du dispositif 20,

— un premier circuit soustracteur CS, ici représenté sous la forme d'une série d'amplificateurs retranchant respectivement les valeurs mémorisées de celles présentes en sortie des circuits d'amplification des signaux des détecteurs correspondants,

— un circuit de mesure CM produisant en sortie 29 la moyenne des signaux vidéo-fréquence, présents en sortie des circuits d'amplification CA,

— un deuxième circuit soustracteur retranchant ladite valeur moyenne du signal de chaque détecteur. Il peut être réalisé en transmettant aux entrées inverseuses du premier étage formé de circuits d'amplification opérationnels le signal de sortie présent en 29.

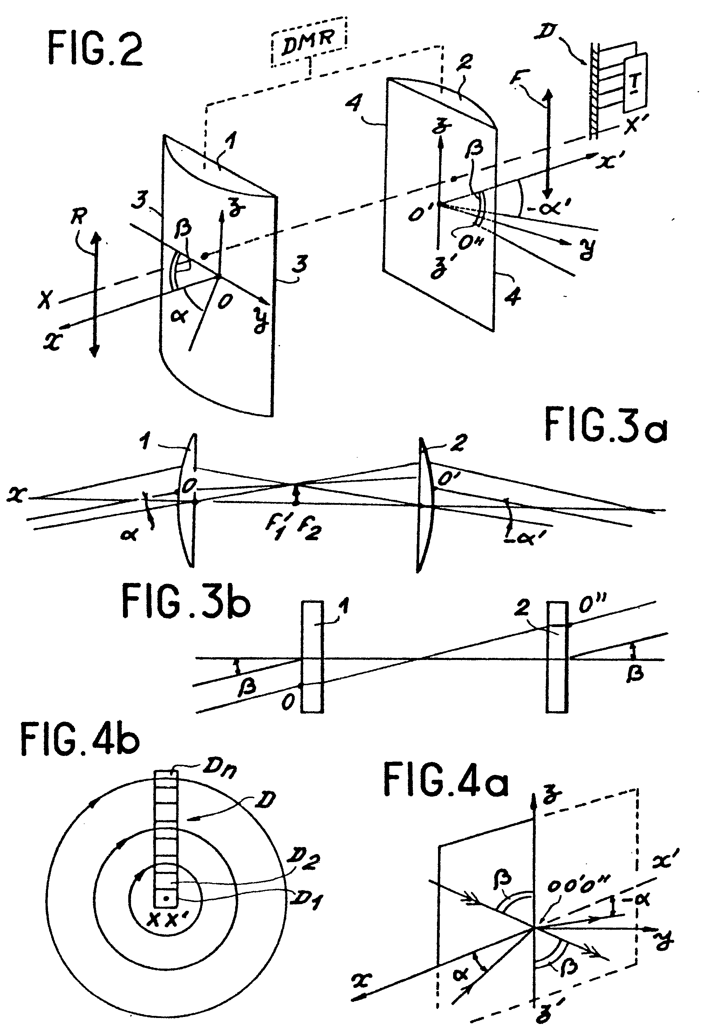

La figure 2 représente deux éléments optiques cylindriques 1 et 2, à savoir deux lentilles cylindriques comportant respectivement des génératrices 3 et 4. Les deux éléments optiques cylindriques 1 et 2 sont entraînés solidairement en rotation par l'intermédiaire d'un dispositif DMR. Cette rotation se produit autour d'un axe X X' perpendiculaire à la direction des génératrices 3 et 4. Une optique de focalisation F disposée en aval focalise les rayons sortant de l'élément cylindrique 2 sur un réseau de détecteurs D disposé dans son plan focal et comprenant une pluralité de détecteurs s'étendant depuis l'axe optique X X' du dispositif. Les rayons lumineux correspondant à l'image analysée sont introduits à l'entrée de l'élément optique cylindrique 1, éventuellement par l'intermédiaire de moyens de réception optiques R consistant par exemple en un dôme de réception et/ou en une optique de renvoi. Comme on va le montrer maintenant, la mise en rotation solidaire des éléments optiques cylindriques 1 et 2 va produire un balayage rotatif de l'image sur le réseau de détecteurs D. Des moyens vidéo-fréquence de traitement T des signaux de détecteurs sont associés aux détecteurs du réseau de détecteurs D.

Sur la figure 2, on a également figuré deux rayons lumineux incidents en un point O sur l'élément optique cylindrique 1. Ces deux rayons lumineux font respectivement des angles $\alpha$ et $\beta$ avec l'axe X X'. Le rayon qui fait un angle $\alpha$ avec l'axe X X' est situé dans un plan xOy perpendiculaire aux génératrices 3 de l'élément 1. Le rayon qui fait un angle $\beta$ avec l'axe X X' est situé dans un plan xOz parallèle aux génératrices 3.

La figure 3a est une coupe dans le plan xOy, où les éléments optiques cylindriques qui sont dans le cas envisagé des lentilles cylindriques, sont assimilables à des lentilles convergentes. Les deux foyers des lentilles représentés sur la figure 2a sont confondus, de manière à réaliser un système afocal et le rayon sortant de la lentille 2 fera avec celle-ci un angle -$\alpha'$ défini par la relation:

$$tg\alpha' = \frac{f'_1}{f_2} tg\alpha$$

où $f'_1$ et $f_2$ sont les distances focales respectives de la lentille 1 et de la lentille 2.

Dans le cas particulier où ces distances focales sont égales, on aura $\alpha' = -\alpha$.

La figure 3b représente une coupe par un plan passant par O et parallèle aux génératrices, à savoir le plan xOz. Dans ce plan ou tout plan parallèle aux génératrices, les lentilles 1 et 2 sont des lames à faces parallèles, et par conséquent tout rayon incident suivant un angle $\beta$ par rapport à l'axe Ox ressortira également avec un angle $\beta$. A la figure 1, on a figuré le rayon sortant correspondant.

Par référence, la figure 4a où les points O, O' et O'' ont été par convention représentés confondus, on a figuré les déviations angulaires de chacun des rayons incidents précités, au cas où les distances focales des lentilles 1 et 2 sont égales.

Du point de vue angulaire, les déviations reviennent au produit d'une symétrie par rapport à un point, par une symétrie par rapport à un plan, ledit plan contenant les axes X X' et z z', c'est-à-dire un plan parallèle à l'axe de rotation X X' des éléments optiques cylindriques et à leurs génératrices, et tout se passe donc comme si un miroir fictif était situé dans le plan xOz.

Il en résulte qu'à tout rayon incident à l'entrée de la lentille 1 correspondra, à la sortie de la lentille 2, un rayon animé d'un mouvement de rotation doublé par rapport à celui du mouvement de rotation des lentilles 1 et 2 autour de l'axe X X'. Une rotation de 90° des lentilles cylindriques, correspondra à une rotation de 180° de l'image autour du détecteur.

La figure 4b représente le balayage circulaire obtenu lorsque les distances focales des deux lentilles sont égales. Un réseau de détecteurs ($D_1$, $D_2$, ... $D_n$) régulièrement espacés et s'étendant à partir de l'axe X X' dont la trace correspond à un détecteur $D_1$ d'extrémité du réseau sera balayé par la rotation de l'image.

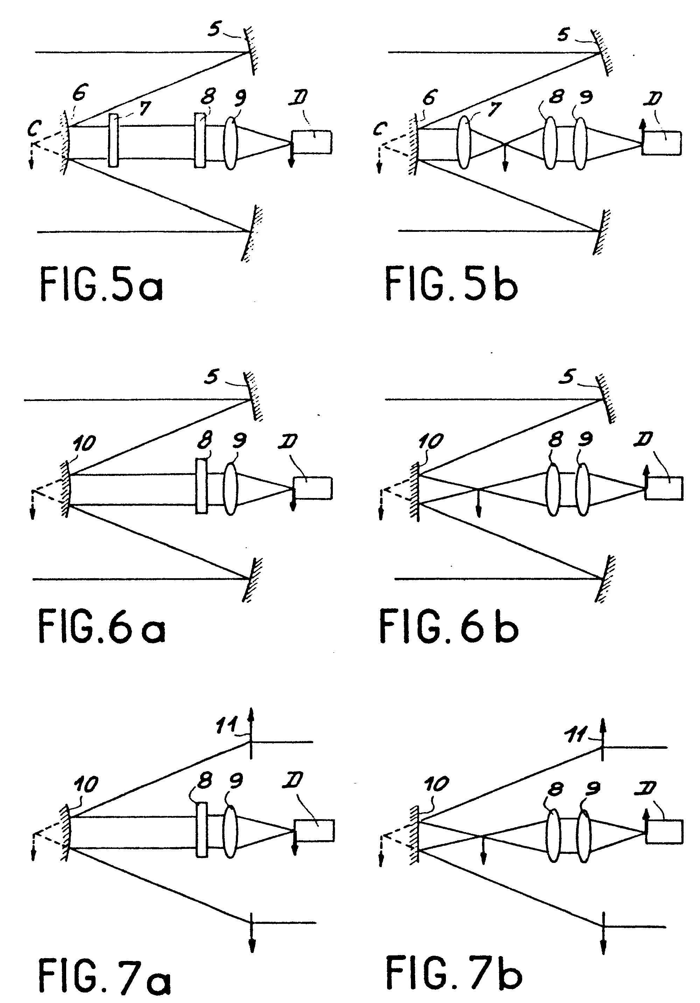

Les figures 5a et 5b illustrent un mode de réalisation où les rayons lumineux incidents sont renvoyés à l'entrée d'un groupe de deux lentilles cylindriques 7 et 8, par l'intermédiaire d'un dispositif de repliement de faisceaux du type Cassegrain qui comporte un miroir principal 5 pourvu d'une ouverture axiale et un miroir secondaire 6. Une lentille convergente 9 focalise les rayons lumineux sortant de la lentille cylindrique 8 sur le détecteur D. L'axe passant par le centre du miroir shpérique 6 et perpendiculaire aux génératrices des lentilles cylindriques 7 et 8 définit l'axe optique du système.

Sur la figure 5a, qui est une coupe du système par un plan parallèle aux génératrices des lentilles 7 et 8, on a représenté un faisceau parallèle à l'axe optique du système et qui est transformé par l'ensemble des miroirs 5 et 6 en un faisceau parallèle à l'axe optique du système.

Comme, dans le plan parallèle aux génératrices, les lentilles cylindriques 7 et 8 sont assimilables à des lames à faces parallèles, le faisceau parallèle sera focalisé sur les détecteurs par la lentille convergente 9. On aura donc une image virtuelle au centre de la lentille shpérique 6 et une image réelle de même sens focalisée sur les détecteurs.

Sur la figure 5b qui est une coupe par un plan perpendiculaire aux génératrices des lentilles cylindriques 7 et 8, le faisceau parallèle à l'axe optique est également renvoyé par l'ensemble du miroir 5 et 6 sous forme de rayons parallèles. La lentille cylindrique 7, qui dans ce plan est assimilable à une lentille convergente va focaliser ces rayons dans son plan focal, et la lentille cylindrique 8 va retransformer les rayons en un faisceau parallèle à l'axe optique qui sera repris par la lentille convergente 9 et focalisée sur le réseau de détecteurs D. On aura donc une image virtuelle au centre C du miroir sphérique 6, une image réelle de même sens à distance égale à la distance focale de la lentille 7, et une image réelle de sens contraire au niveau du détecteur.

Les figures 6a et 6b représentent une variante des figures 5a et 5b où on substitue au miroir sphérique 6 et à la lentille cylindrique 7 un miroir cylindrique 10 dont les génératrices sont perpendiculaires aux génératrices de la lentille cylindrique 8.

Sur la figure 6a qui est une coupe par un plan parallèle aux génératrices de la lentille cylindrique 8, un faisceau parallèle à l'axe optique du système est renvoyé selon un faisceau parallèle par le miroir cylindrique 10, qui, dans ce plan, est assimilable à un miroir sphérique. Le faisceau parallèle est repris par la lentille cylindrique 8 qui, dans ce plan, est assimilable à une lame à faces parallèles, et ensuite focalisée sur le réseau de détecteurs D par la lentille convergente 9. On a donc, dans ce plan, une image virtuelle au niveau d'un point correspondant au centre du miroir cylindrique 10, et une image réelle au niveau du réseau de détecteurs et de même sens que l'autre.

Sur la figure 6b qui est une coupe par un plan perpendiculaire aux génératrices la lentille cylindrique 8, un faisceau parallèle à l'axe optique du système est renvoyé par la lentille cylindrique 10 qui, dans ce plan, est assimilable à un miroir plan. Ce faisceau converge dans un plan correspondant au foyer de la lentille cylindrique 8 qui, dans ce plan, est assimilable à une lentille convergente et forme à la sortie de celle-ci un faisceau parallèle qui est repris par la lentille convergente 9 et focalisée sur le réseau de détecteurs D. On a donc une image virtuelle située à un point symétrique du foyer de la lentille cylindrique 8 par rapport à la trace du miroir cylindrique 10, une image réelle de même sens au foyer de la lentille cylindrique 8, et une image réelle de sens contraire au niveau des détecteurs.

Les figures 7a et 7b sont des variantes des figures 6a et 6b, où le miroir principal 5 est remplacé par une lentille convergente 11 pourvue d'une ouverture axiale. Les schémas optiques représentés correspondent à ceux des figures 6a et 6b. Une telle substitution est bien entendu également possible dans les cas des figures 5a et 5b.

Dans le cas d'un balayage ligne par ligne, les détecteurs sont également disposés sour forme de réseau et voient défiler l'image transversalement par rapport à l'axe du réseau, et la reconstitution de l'image est analogue, aux différences des systèmes de coordonnées près.

Les figures suivantes se rapportent donc à des circuits électroniques utilisables quelque soit le mode de balayage envisagé.

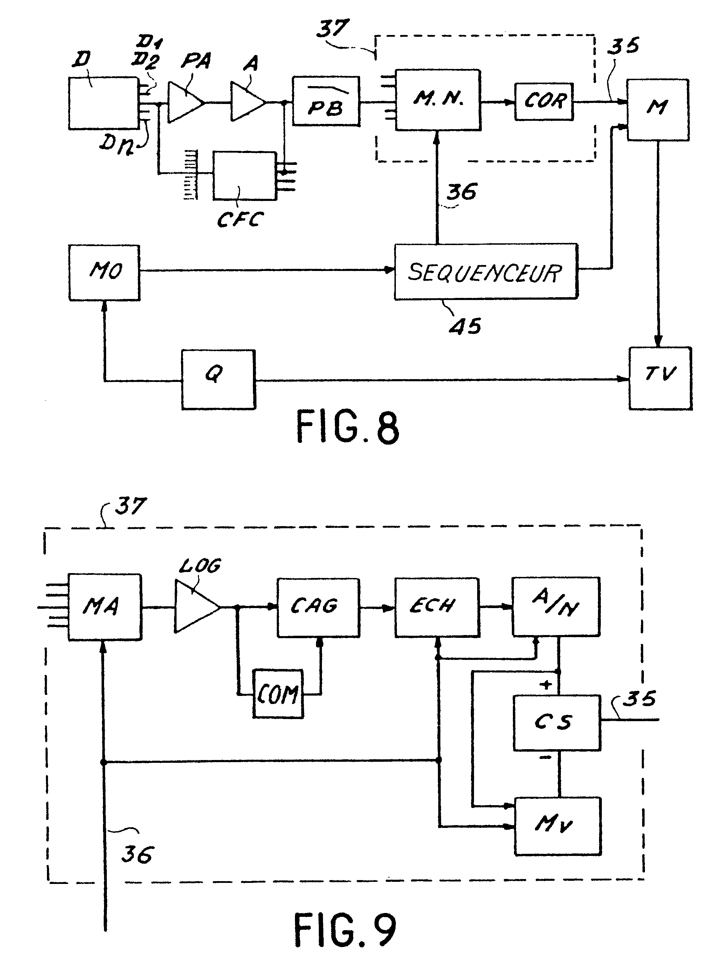

La figure 8 représente un ensemble électronique de traitement vidéo-fréquence des signaux détecteurs. A chaque détecteur, est associé un circuit d'amplification composé d'un pré-amplificateur PA et d'un amplificateur A, un correcteur de fond continu CFC qui supprime les composantes continues des signaux de mesure et un filtre passe-bas PB, destiné à limiter la bande passante, donc à améliorer le rapport signal/bruit.

Les tensions amplifiées et filtrées sont introduites dans un bloc de multiplexage et de correction 37. Ce bloc comporte un circuit de multiplexage et codage numérique MN et un circuit de correction de tensions résiduelles COR. Une ligne bus 35 introduit séquentuellement les valeurs mesurées dans une mémoire M. L'échantillonnage des signaux est synchronisé par exemple à partir d'un quartz Q qui pilote un moteur MO entraînant en rotatin les éléments optiques d'une manière connue en soi.

Le séquenceur 45 introduit au fur et à mesure les valeurs correspondants aux coordonnées dans le mémoire M en réponse à une commande fournie par la synchronisation précitée et correspondant au commencement d'un nouveau multiplexage des n détecteurs. Les valeurs mesurées seront ainsi mises en mémoire par exemple ligne par ligne et image par image selon un tableau correspondant à des coordonnées cartésiennes. Une unité de traitement vidéo TV synchronisée, de préférence par le quartz Q, génèrera séquentiellement des images de télévision ligne par ligne.

Un mode de réalisation du bloc de multiplexage et de correction 37 est représenté à la figure 8. Il comporte:

— un circuit de multiplexage analogique MA recevant à son entrée un signal amplifié fourni par les détecteurs;

— un amplificateur logarithmique LOG qui a pour fonction de réaliser une compression des signaux correspondants à des objets très lumineux de manière à éviter la saturation;'

— un circuit de contrôle automatique de gain CAG recevant, par l'intermédiaire d'un circuit de commande COM des signaux de contrôle à partir de la sortie des amplificateurs logarithmiques LOG;

— un circuit d'échantillonnage ECH lisant par échantillonnage les signaux provenant de circuits de contrôle automatique de gain CAG et les introduisant séquentiellement dans un convertisseur analogique numérique A/N;

— un circuit soustracteur CS recevant à son entrée les signaux de sortie du convertisseur analogique numérique A/N et des signaux mémorisés dans une mémoire $M_v$ et correspondant aux valeurs des signaux fournis par chaque détecteur dans des conditions de référence;

— et un synchronisation fournie par une ligne 36 et répartie sur les circuits MA, ECH, A/N et $M_v$.

Le circuit soustracteur CS soustrait séquentiellement à chaque valeur mesurée par chaque détecteur, le contenu de la mémoire $M_v$ relative au détecteur correspondant. Sa fonction, qui va être explicitée ci-dessous, est de permettre une initialisation de tous les détecteurs avant la mise en service des dispositifs, ou à des intervalles de temps définis.

Une initialisation permettant la suppression des tensions résiduelles correspondant à la dérive notamment thermique des entrées des circuits d'amplification et notamment des pré-amplificateurs des détecteurs est réalisée soit une fois pour toutes lors de la mise en service dudispositif, soit toutes les N images, N étant fonction des dérives tolérées. On réalise une initialisation en soumettant tous les détecteurs à un flux uniforme, par exemple par occultation du système. Les valeurs mesurées par chaque détecteur dans ces conditions prétéderminées sont stockées dans la mémoire $M_v$ et ensuite retranchées des valeurs de mesure des détecteurs correspondants, qui sont échantillonnées lors d'une détection d'image.

Il va de soi que l'on peut également utiliser pour réaliser l'initialisation mentionnée ci-dessus des dispositifs analogiques connus pour réaliser la fonction mémoire lors de l'initialisation et ensuite mettre en oeuvre des amplificateurs et une logique de couplage pour réaliser l'opération de soustraction.

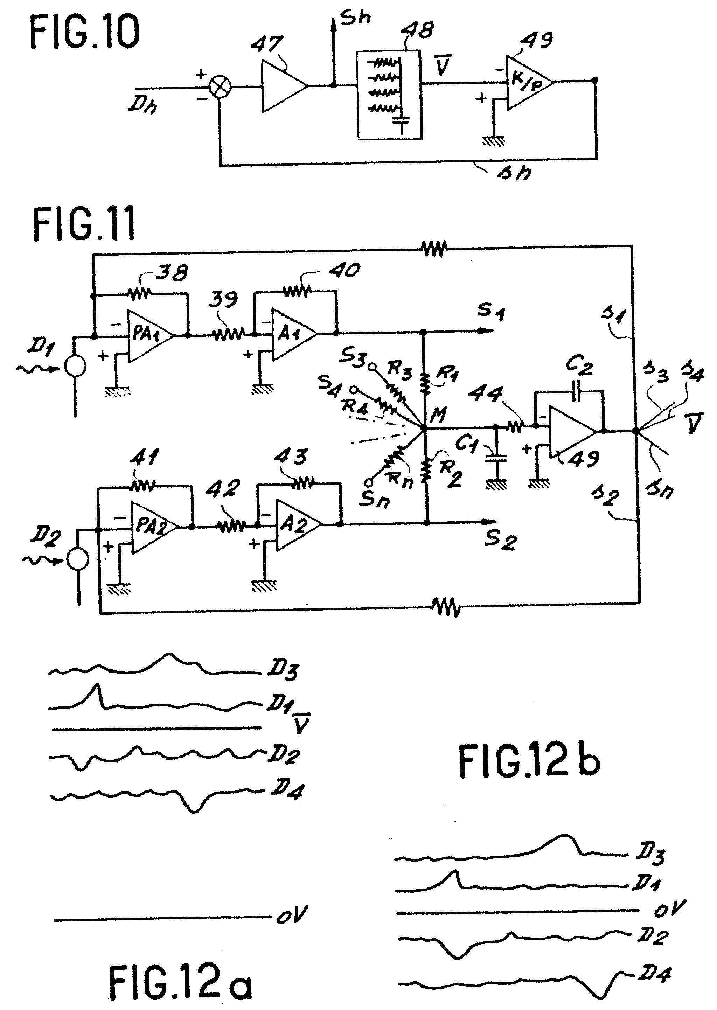

Par référence aux figures 10 à 12, on va maintenant décrire un mode de réalisation du circuit CFC qui retranche la composante continue moyenne de l'ensemble des signaux, disposition particulièrement avantageuse au cas où des détecteurs infra-rouges sont utilisés. En effet, si on veut éviter de réaliser l'initialisation des détecteurs à chaque image, il est difficile d'utiliser des pré-amplificateurs pourvus d'une capacité d'entrée, étant donné que, si dans l'image apparaît une zone étendue et à contraste faible mais constant, elle ne pourrait produire, lors du balayage et quelle que soit sa luminosité, que des signaux continus qui se trouveraient affaiblis avec une constante de temps prédéterminée, ce qui conduirait à une détérioration et à une perte du contraste de l'image. Selon l'invention, on utilise des pré-amplificateurs dépourvus de capacité d'entrée et on élimine la composante continue moyenne de l'image. L'initialisation réalisée peut être alors valable pour une durée assez longue (par exemple quelques minutes).

Par référence à la figure 10, un signal correspondant à un détecteur $D_h$ est introduit dans un circuit d'amplification 47. Les signaux sortant de l'amplificateur 47 sont introduits dans un circuit moyenneur 48 qui reçoit également les signaux de tous les autres détecteurs composant le réseau de détecteurs, et produit à sa sortie une valeur moyenne $\overline{V}$. Cette valeur moyenne est injectée dans un amplificateur 49 éventuellement intégrateur dont le signal de sortie $s_h$ est réinjecté en contre-réaction à l'entrée de l'amplificateur 47. Le système asservira la sortie de l'amplificateur 47 référencée $S_h$ à délivrer un signal centré par rapport à la valeur moyenne de tous les signaux.

La figure 11 représente un mode de réalisation du diagramme de la figure 10. Un signal produit par un détecteur $D_1$ est introduit à l'entrée négative d'un pré-amplificateur PA1 qui comporte une résistance de contre-réaction 38. Les signaux en sortie de l'amplificateur PA1 sont introduits dans un amplificateur A1 qui comporte une résistance d'entrée 39, une résistance de contre-réaction 40, ainsi qu'une sortie $S_1$.

Les signaux provenant d'un détecteur $D_2$ sont introduits à l'entrée négative d'un pré-amplificateur PA2 comportant une résistance de contre-réaction 41. Les signaux sortant du pré-amplificateur PA2 sont introduits dans un amplificateur A2 comportant une résistance d'entrée 42 et une résistance de contre-réaction 43 ainsi qu'une sortie $S_2$. Les sorties $S_1$, $S_2$, $S_3$, $S_4$, ... $S_n$, qui correspondent à des chaînes de mesure dont les gains ont été ajustés de manière à correspondre à des gains globalement égaux, sont reliées par l'intermédiaire de résistances de valeurs égales respectivement $R_1$, $R_2$, $R_3$, $R_4$, ... $R_n$ à un point commun M. Entre ce point M et la masse est disposé un condensateur $C_1$. Le point M est relié également à l'entrée négative d'un intégrateur 49 comportant une résistance d'entrée 44 et un condensateur de contre-réaction $C_2$. La sortie de l'intégrateur 49 est reliée, par l'intermédiaire des liaisons résistives $s_1$, $s_2$, $s_3$, $s_4$, ... $s_n$ aux entrées négatives des pré-amplificateurs correspondant à chacun des détecteurs composant le réseau de détecteurs.

La figure 12a représente des signauc amplifiés fournis par un système à quatre détecteurs $D_1$, $D_2$, $D_3$, $D_4$. On voit que la valeur moyenne se situe à une valeur $\overline{V}$ très différente du niveau 0 volt. La figure 12b représente les signaux correspondant aux détecteurs $D_1$, $D_2$, $D_3$, $D_4$ lorsqu'on utilise un circuit tel que décrit dans les figures 10 et 11. Les valeurs représentées sont centrées autour de la valeur 0 volt. La composante continue des signaux a été ainsi éliminée sans détériorer l'information continue relative des signaux.

On remarquera que le circuit décrit ci-dessus est réalisé par des techniques analogiques. Il va de soi que les techniques numériques s'inspirant du même schéma rentrent dans le cadre de l'invention. En effet, chacune des opérations décrites figures 10 et 11 est aisément transposable dans le cas où un tel traitement est opéré sur les signaux convertis en mode numérique.

**Revendications**

1. Dispositif opto-électronique d'analyse d'images vidéo-fréquence par balayage comportant une optique entraînée (1, 2) de manière à produire un balayage d'images, une optique de focalisation (F) sur un dispositif de détection (D) comprenant au moins un réseau de détecteurs, et des moyens vidéo-fréquence de traitement des signaux détectés comprenant des circuits d'amplification (CA) des signaux détectés respectifs et un dispositif de correction des dérives thermiques, caractérisé en ce que chaque circuit d'amplification étant relié au détecteur correspondant par une liaison continue, ledit dispositif de correction est formé par un dispositif dit d'occultation (20, 27) à deux états, pour produire dans le premier état lors d'une phase d'initialisation un flux uniforme sur tous les détecteurs à la place du flux de réception correspondant à l'image vidéo-fréquence et inversement dans le second état, et une boucle de correction comprenant:

— une mémoire de stockage ($M_v$) mémorisant les valeurs des signaux en sortie desdits circuits d'amplification (CA) lorsque le dispositif d'occultation (20, 27) est dans le premier état,

— un premier circuit soustracteur (CS) retranchant respectivement lesdites valeurs mémorisées, de celles en sortie des circuits d'amplification respectifs en sorte de compenser lesdites dérives,

— un circuit de mesure (CM) produisant la valeur moyenne des signaux vidéo-fréquence amplifiés,

— un deuxième circuit soustracteur retranchant ladite valeur moyenne, du signal de chaque détecteur.

2. Dispositif selon la revendication 1, caractérisé en ce que ledit circuit de mesure de la moyenne vidéo-fréquence comprend un intégrateur (49) de la moyenne vidéo-fréquence, de telle sorte que le circuit de mesure produise en sortie la moyenne vidéo-fréquence intégrée.

3. Dispositif selon la revendication 2, caractérisé en ce que ledit circuit de mesure comprend un réseau de résistances ($R_1$, $R_2$, ... $R_n$), comportant une borne commune M, chaque résistance recevant à son autre borne ($S_1$, $S_2$, ... $S_n$) une tension représentative d'un signal fourni par un détecteur, un condensateur ($C_1$) relié à la borne commune et à la masse et une liaison entre la borne commune et l'entrée d'un intégrateur (49), et en ce que le deuxième circuit soustracteur comprend une boucle de contre-réaction réinjectant ladite valeur moyenne $\overline{V}$ présente en sortie de l'intégrateur (49) à l'entrée de chacun des circuits d'amplification correspondant à chaque détecteur.

4. Dispositif selon l'une des revendications précédentes, caractérisé en ce que les détecteurs sont des détecteurs d'infra-rouge.

5. Dispositif selon l'une des revendications 1 à 3, caractérisé en ce que le dispositif dit d'occultation (20) est un diaphragme dont l'obturation est pilotée par une commande (21) et disposé en avant de sa pupille d'entrée.

6. Dispositif selon l'une des revendications 1 à 3, caractérisé en ce que le dispositif d'occultation est un cache amovible disposé en avant de sa pupille d'entrée.

7. Dispositif selon l'une des revendications 1 à 3, caractérisé en ce que le dispositif d'occultation est un diffuseur lambertien (27) disposé à un foyer intermédiaire du dispositif.

8. Dispositif selon l'une des revendications 1 à 7, caractérisé en ce que ladite optique est entraînée de manière à produire un balayage rotatif.

**Patentansprüche**

1. Optoelektronische Vorrichtung zur Analyse von videofrequenten Bildern durch Abtastung, mit einer derart angetriebenen Optik (1,2), dass eine Bildabtastung erzeugt wird, einer Optik (F) zum Fokussieren auf einer Detektionsvorrichtung (D), die wenigstens eine Detektorgruppe enthält, und videofrequenten Mitteln zur Verarbeitung der Detektionssignale, mit Schaltungen (CA) zur Verstärkung der jeweiligen Detektionssignale und einer Vorrichtung zur Korrektur der thermischen Abdriften, dadurch gekennzeichnet, dass jede Verstärkerschaltung mit dem entsprechenden Detektor über eine durchgehende Verbindung verbunden ist und die Korrekturvorrichtung gebildet ist aus einer Verschlussvorrichtung (20, 27) mit zwei Zuständen, um im ersten Zustand während einer Initiierungsphase einen gleichförmigen Fluss auf allen Detektoren anstelle des einem videofrequenten Bild entsprechenden Empfangsflusses zu erzeugen und umgekehrt im zweiten Zustand, und aus einer Korrekturschleife, die enthält:

— einen Speicher ($M_v$) zum Speichern der Signalwerte am Ausgang der Verstärkerschaltungen (CA), wenn die Verschlussvorrichtung (20, 27) sich in dem ersten Zustand befindet,

— eine erste Subtrahierschaltung (CS), welche jeweils die genannten gespeicherten Werte von denjenigen abzieht, die am Ausgang der jeweiligen Verstärkerschaltungen vorhanden sind, um die genannten Abdriften zu kompensieren,

— eine Messschaltung (CM), welche den Mittelwert der verstärkten videofrequenten Signale bildet,

— eine zweite Subtrahierschaltung, welche den genannten Mittelwert von dem Signal jedes Detektors abzieht.

2. Vorrichtung nach Anspruch 1, dadurch gekennzeichnet, dass die genannte Schaltung zur Messung des videofrequenten Mittelwertes einen Integrator (49) zum Integrieren des videofrequenten Mittelwertes umfasst, derart, dass die Messschaltung ausgangsseitig den integrierten videofrequenten Mittelwert erzeugt.

3. Vorrichtung nach Anspruch 2, dadurch gekennzeichnet, dass die genannte Messschaltung ein Widerstandsnetzwerk ($R_1$, $R_2$, ... $R_n$) enthält, welches einen gemeinsamen Anschluss M aufweist, wobei jeder Widerstand an seinem anderen Anschluss ($S_1$, $S_2$, ... $S_n$) eine Spannung empfängt, welche ein von einem Detektor geliefertes Signal darstellt, einen Kondensator ($C_1$) umfasst, der an den gemeinsamen Anschluss und an Masse gelegt ist, und eine Verbindung zwischen dem gemeinsamen Anschluss und dem Eingang eines Integrators (49) umfasst, und dass die zweite Subtrahierschaltung eine Gegenkopplungsschleife enthält, welche den genannten Mittelwert $\overline{V}$, der am Ausgang des Integrators (49) vorhanden ist, am Eingang jeder jeweils einem Detektor entsprechenden Verstärkerschaltung einspeist.

4. Vorrichtung nach einem der vorstehenden Ansprüche, dadurch gekennzeichnet, dass die Detektoren Infrarotdetektoren sind.

5. Vorrichtung nach einem der Ansprüche 1 bis 3, dadurch gekennzeichnet, dass die Verschlussvorrichtung (20) eine Blende ist, deren Verschluss durch eine Steuereinrichtung (21) gesteuert wird und die vor ihrer Eingangspupille angeordnet ist.

6. Vorrichtung nach einem der Ansprüche 1 bis 3, dadurch gekennzeichnet, dass die Verschlussvorrichtung eine entfernbare Klappe ist, welche vor ihrer Eintrittspupille angeordnet ist.

7. Vorrichtung nach einem der Ansprüche 1 bis 3, dadurch gekennzeichnet, dass die Verschlussvorrichtung ein Lambert'scher Diffusor (27) ist, welcher in einem Zwischenbrennpunkt der Vorrichtung angeordnet ist.

8. Vorrichtung nach einem der Ansprüche 1 bis 7, dadurch gekennzeichnet, dass die genannte Optik derart angetrieben wird, dass eine Drehablenkung erzeugt wird.

**Claims**

1. Optoelectronic device for the analysis of video frequency images by scanning comprising an optical system (1, 2) driven so that an image scan is produced, an optical system (F) for focusing on a detection device (D) comprising at least one detector group and video frequency means processing the detection signals comprising circuits (CA) for amplification of respective detected signals and a device for correction of the thermal drifts, characterized in that each amplification circuit is connected to the corresponding detector by a continuous connection, said correction device is formed by a so called occultation device (20, 27) with two states to produce in the first state during an initialization phase a uniform flux on all the detectors instead of the reception flux corresponding to the video frequency image and conversely in the second state, and a correction loop comprising:

— a memory ($M_v$) storing the signal values at the output of said amplification circuits (CA) when the occultation device (20, 27) is in the first state,

— a first subtraction circuit (CS) deducting respectively said stored values from those at the output of the respective amplification circuits to compensate said drifts,

— a measuring circuit (CM) producing the mean value of the amplified video frequency signals,

— a second subtraction circuit subtracting said mean value from the signal of each detector.

2. Device according to claim 1, characterized in that said measuring circuit for measuring the video frequency mean comprises an integrator (49) for integrating the video frequency mean in such a manner that the measuring circuit produces at the output the integrated video frequency mean.

3. Device according to claim 2, characterized in that said measuring circuit comprises a resistor network ($R_1$, $R_2$, ... $R_n$) comprising a common terminal M, each resistor receiving at its other terminal ($S_1$, $S_2$, ... $S_n$) a voltage representing a signal furnished by a detector, a capacitor ($C_1$) connected to the common terminal and to ground and a connection between the common terminal and the input of an integrator (49), and that the second subtraction circuit comprises a negative feedback loop reinjecting said mean value $\overline{V}$ present at the output of the integrator (49) at the input of each of the amplification circuits corresponding to each detector.

4. Device according to one of the preceding claims, characterized in that the detectors are infrared detectors.

5. Device according to one of claims 1 to 3, characterized in that the so called occultation device (20) is a diaphragm, the closing of which is controlled by a control means (21) and which is disposed in front of its inlet aperture plate.

6. Device according to one of claims 1 to 3, characterized in that the occultation device is a removable flap which is disposed in front of its inlet aperture plate.

7. Device according to one of claims 1 to 3, characterized in that the occultation device is a Lambert diffuser (27) which is disposed in an intermediate focal point of the device.

8. Device according to one of claims 1 to 7, characterized in that said optical system is driven so as to produce a rotary deflection.

FIG.1b          FIG.1a

0 052 024

FIG.2

DMR

FIG.3a

FIG.3b

FIG.4b

FIG.4a

FIG.5a

FIG.5b

FIG.6a

FIG.6b

FIG.7a

FIG.7b

FIG.8

FIG.9

**FIG.10**

**FIG.11**

**FIG.12 a**

**FIG.12 b**